# FASCICULE DE BREVET EUROPEEN

(11) **EP 4 400 425 B1**
(45) Date de publication et mention de la délivrance du brevet: **29.10.2025**
(21) Numéro de dépôt: 24151507.1
(22) Date de dépôt: 12.01.2024
(51) Int. Cl.: B64D 29/08

(54) **SYSTÈME DE PROPULSION D'AÉRONEF COMPORTANT UNE NACELLE ÉQUIPÉE D'UN SYSTÈME D'ARTICULATION AMÉLIORÉ**
FLUGZEUGANTRIEBSSYSTEM MIT GONDEL MIT VERBESSERTEM GELENKSYSTEM
AIRCRAFT PROPULSION SYSTEM COMPRISING A NACELLE PROVIDED WITH AN IMPROVED ARTICULATION SYSTEM

(30) Priorité: 16.01.2023 FR 2300371
(43) Date de publication de la demande: 17.07.2024
(73) Titulaire: AIRBUS OPERATIONS, 31060 Toulouse Cedex 9 (FR)
(72) Inventeur: DE OLIVEIRA, Grégory, 31060 TOULOUSE (FR); BOURDIEU, Thomas, 31060 TOULOUSE (FR); FERREIRA, Julien, 31060 TOULOUSE (FR)
(74) Mandataire: Cabinet Le Guen Maillet

(56) Documents cités:
- DE-C- 687 496
- US-A1- 2019 284 856
- US-A1- 2021 190 005

## Description

### DOMAINE TECHNIQUE

La présente invention concerne un système de propulsion d'aéronef comportant un châssis, une nacelle avec deux capots de soufflante et, pour chacun, un système d'articulation monté sur le châssis pour articuler le capot de soufflante. L'invention concerne également un aéronef comportant un tel système de propulsion.

### ÉTAT DE LA TECHNIQUE ANTÉRIEURE

Un aéronef comporte un fuselage de chaque côté duquel est fixée une aile. Sous chaque aile est suspendu au moins un système de propulsion tel qu'un turboréacteur double flux. Chaque système de propulsion comporte un châssis, un noyau qui constitue le moteur et une nacelle qui entoure le noyau, où le noyau et la nacelle sont fixés au châssis.

Le système de propulsion est fixé sous l'aile par l'intermédiaire d'un mât qui est fixé entre la structure de l'aile et le châssis.

La nacelle comporte entre autres, des capots montés sur le châssis, et dans le cas d'un turboréacteur double flux, la nacelle comporte de l'avant vers l'arrière, un capot d'entrée d'air, deux capots de soufflante et des capots arrière. Le capot d'entrée d'air délimite l'entrée de la nacelle par laquelle l'air qui alimente le noyau est introduit. Les capots de soufflante entourent une soufflante qui aspire l'air depuis l'entrée de la nacelle pour l'envoyer vers le noyau. Les capots arrière recouvrent l'arrière de noyau jusqu'à la tuyère d'éjection.

Les deux capots de soufflante sont montés articulés sur le châssis par l'intermédiaire de charnières dont les axes sont globalement parallèles à l'axe longitudinal du système de propulsion. En partie haute de la nacelle, les deux capots de soufflante peuvent être jointifs l'un avec l'autre ou séparés l'un de l'autre par un capot fixe.

Bien qu'un tel arrangement donne satisfaction, il peut arriver que des interactions apparaissent entre les deux capots de soufflante ou entre un capot de soufflante et le capot fixe lors de l'ouverture ou de la fermeture d'un capot de soufflante. Pour limiter ces interactions, il est connu d'éloigner les capots pour laisser entre eux un jeu fonctionnel important.

Il est donc nécessaire de trouver un arrangement qui permet d'empêcher entre autres ces interactions, limiter le jeu entre les différents capots et ainsi réduire la trainée parasite. Le document DE 687 496 C décrit un capot de moteur d'avion en forme de tambour, constitué de parties rabattables reliées entre elles d'un côté par une double charnière et de l'autre côté par une fermeture à serrage.

### EXPOSÉ DE L'INVENTION

Un objet de la présente invention est de proposer un système de propulsion d'aéronef comportant un châssis, une nacelle avec deux capots de soufflante et pour chacun, un système d'articulation particulier monté sur le châssis pour articuler le capot de soufflante.

À cet effet, est proposé un système de propulsion pour un aéronef, ledit système de propulsion comportant :
- un châssis,
- une nacelle comportant deux capots de soufflante,
- pour chaque capot de soufflante, au moins un système d'articulation fixé entre le châssis et ledit capot de soufflante, de manière à déplacer ledit capot de soufflante entre une position fermée et une position ouverte et inversement, et
- pour chaque capot de soufflante, un moyen de verrouillage arrangé pour prendre alternativement une position verrouillée dans laquelle il assure le verrouillage dudit capot de soufflante sur le châssis en position fermée et une position déverrouillée dans laquelle il n'assure pas le verrouillage dudit capot de soufflante sur le châssis,
où chaque système d'articulation comporte :
- un arbre comportant un cylindre central avec un axe et au moins un cylindre latéral chacun avec un axe, où le cylindre central est monté mobile en rotation sur le châssis autour de son axe, où ledit au moins un cylindre latéral est monté mobile en rotation sur le capot de soufflante autour de son axe, et où les axes desdits au moins un cylindre latéral sont coaxiaux et parallèles mais distincts de l'axe du cylindre central,
- des moyens de blocage arrangés pour limiter la rotation du cylindre central par rapport au châssis entre une première position correspondant à la position fermée du capot de soufflante et une deuxième position correspondant à une position intermédiaire du capot de soufflante dans laquelle le capot de soufflante est décalé latéralement du côté correspondant audit capot de soufflante, et
- des moyens d'arrêt arrangés pour autoriser la rotation du capot de soufflante par rapport audit au moins un cylindre latéral entre une première position correspondant à la position intermédiaire du capot de soufflante et une deuxième position correspondant à la position ouverte du capot de soufflante et empêcher la rotation du capot de soufflante au-delà de la position intermédiaire en venant de la position ouverte, où les moyens de blocage sont constitués d'une première palette solidaire de l'arbre et de deux premiers plots solidaires du châssis, où les deux premiers plots sont disposés de part et d'autre de la première palette, où l'un des premiers plots est arrangé de manière à ce que la première palette soit en butée contre lui en position fermée du capot de soufflante et où l'autre des premiers plots est arrangé de manière à ce que la première palette soit en butée contre lui en position intermédiaire du capot de soufflante.

Avec un tel arrangement, le capot de soufflante s'écarte latéralement dès le début de son ouverture ce qui permet d'éloigner ledit capot de soufflante du capot voisin, limiter les risques d'interactions et réduire la trainée parasite.

Avantageusement, les moyens d'arrêt sont constitués d'une deuxième palette solidaire de l'arbre et d'un deuxième plot solidaire du capot de soufflante et le deuxième plot est arrangé de manière à ce que la deuxième palette soit en butée contre lui en position intermédiaire du capot de soufflante.

L'invention propose également un aéronef comportant au moins un système de propulsion selon l'une des variantes précédentes.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de côté d'un aéronef selon l'invention,
Fig. 2 est une vue en perspective d'un système de propulsion selon l'invention,
Fig. 3 est une vue en perspective d'un système d'articulation selon l'invention,
Fig. 4 est une vue en perspective d'un arbre mis en œuvre dans le système d'articulation selon l'invention,
Fig. 5 est une vue de dessus du système d'articulation selon l'invention,
Fig. 6 est une vue du système d'articulation de la Fig. 5 en coupe selon la ligne VI-VI en position fermée,
Fig. 7 est une vue de côté du système d'articulation de la Fig. 5 en position fermée,
Fig. 8 est une vue du système d'articulation de la Fig. 5 en coupe selon la ligne VI-VI en position décalée,
Fig. 9 est une vue de côté du système d'articulation de la Fig. 5 en position décalée, et
Fig. 10 est une vue de côté du système d'articulation de la Fig. 5 en position ouverte.

### EXPOSÉ DÉTAILLÉ DE MODES DE RÉALISATION

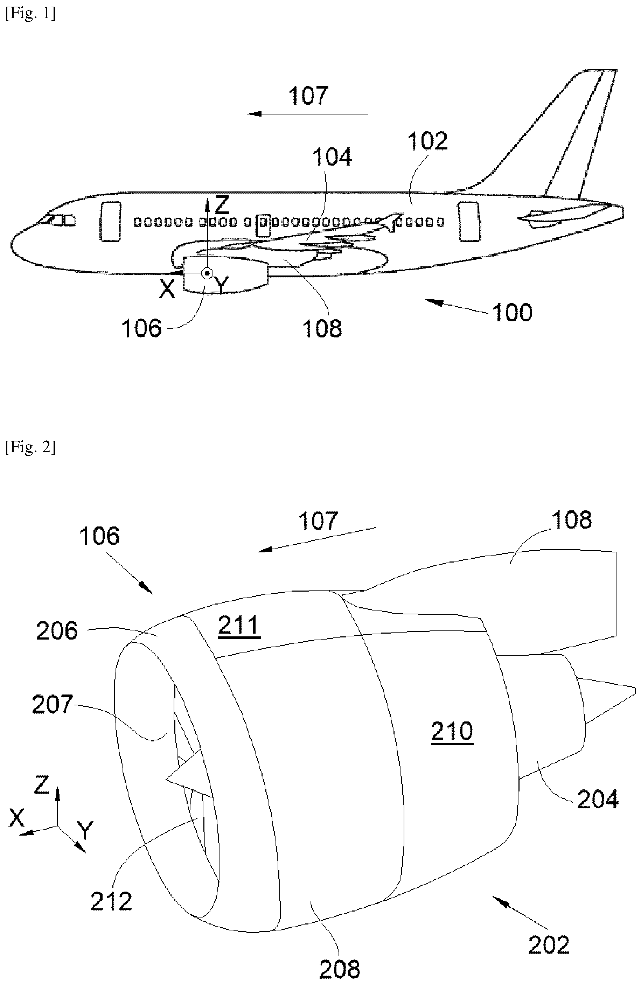

Dans la description qui suit, les termes relatifs à une position sont pris en référence à un aéronef en position d'avancement comme il est représenté sur la Fig. 1.

La Fig. 1 montre un aéronef 100 qui comporte un fuselage 102 de chaque côté duquel est fixée une aile 104 qui porte au moins un système de propulsion 106 tel qu'un turboréacteur double flux qui est fixé sous l'aile 104 par l'intermédiaire d'un mât 108.

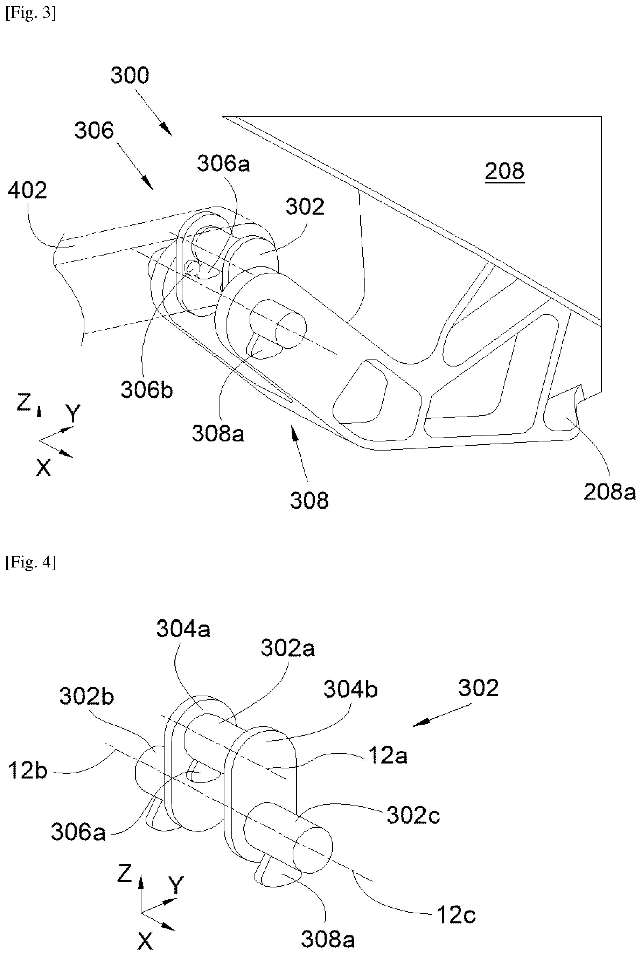

La Fig. 2 montre le système de propulsion 106 qui présente une nacelle 202 et un noyau constituant le moteur 204 et logé à l'intérieur de la nacelle 202. Le système de propulsion 106 comporte également un châssis (402, Fig. 3) auquel sont fixés entre autres le moteur 204 et la nacelle 202. Le moteur 204 est matérialisé ici par la tuyère d'éjection.

Dans la description qui suit, et par convention, on appelle X l'axe longitudinal de la nacelle 202 qui correspond à l'axe longitudinal du système de propulsion 106 et qui est parallèle à l'axe longitudinal de l'aéronef 100 orienté ici positivement dans le sens d'avancement de l'aéronef 100, on appelle Y l'axe transversal horizontal lorsque l'aéronef 100 est au sol, et Z l'axe vertical lorsque l'aéronef 100 est au sol, ces trois directions X, Y et Z étant orthogonales entre elles.

La flèche 107 représente la direction en marche avant de l'aéronef 100 lorsque les systèmes de propulsion 106 sont en fonctionnement. La nacelle 202 présente également un plan médian XZ qui est vertical et passe par l'axe longitudinal X.

La nacelle 202 comporte de l'avant vers l'arrière, un capot d'entrée d'air 206 qui entoure l'entrée d'air 207, de part et d'autre du plan médian XZ, deux capots de soufflante 208 et à l'arrière des capots de soufflante 208, des capots arrière 210 qui peuvent être les capots des inverseurs de poussée du système de propulsion 106. Les capots d'entrée d'air 206 et les capots arrière 210 sont fixés au châssis 402 par tous moyens de fixation appropriés et connus de l'homme du métier. Dans le mode de réalisation de l'invention présenté à la Fig. 2, les deux capots de soufflante 208 sont, en partie haute de la nacelle 202, séparés l'un de l'autre par un capot supérieur 211 qui est également fixé au châssis 402. Selon un autre mode de réalisation non représenté, de l'invention, les deux capots de soufflante 208 sont voisins en partie haute de la nacelle 202.

Les capots de soufflante 208 entourent une soufflante 212 qui se trouve en travers de l'entrée d'air 207 de la nacelle 202 et qui aspire l'air depuis l'entrée d'air 207 pour l'envoyer vers le moteur 204.

Chaque capot de soufflante 208 est monté articulé sur le châssis 402 entre une position fermée dans laquelle, il est resserré autour du moteur 204 et une position ouverte, dans laquelle il est écarté du moteur 204 et inversement. La position ouverte permettant un accès à l'intérieur de la nacelle 202.

Pour chaque capot de soufflante 208, le système de propulsion 106 comporte également un moyen de verrouillage qui est arrangé pour prendre alternativement une position verrouillée dans laquelle il assure le verrouillage dudit capot de soufflante 208 sur le châssis 402 en position fermée et une position déverrouillée dans laquelle il n'assure pas le verrouillage dudit capot de soufflante 208 sur le châssis 402 et le capot de soufflante 208 est alors libre de se déplacer. Le passage de la position verrouillée à la position déverrouillée et inversement est réalisé par exemple par un technicien depuis l'extérieur de la nacelle 202. Le moyen de verrouillage peut prendre la forme d'une serrure ou toute forme connue de l'homme du métier.

Comme le montre la Fig. 3, pour chaque capot de soufflante 208, le système de propulsion 106 comporte au moins un système d'articulation 300 fixé entre le châssis 402 et ledit capot de soufflante 208, de manière à déplacer ledit capot de soufflante 208 entre la position fermée et la position ouverte et inversement.

Afin d'assurer une bonne stabilité du capot de soufflante 208, il y a préférentiellement deux systèmes d'articulation 300 par capot de soufflante 208 dont un est arrangé au niveau d'une partie avant du capot de soufflante 208 et dont un autre est arrangé au niveau d'une partie arrière du capot de soufflante 208 selon l'axe longitudinal X.

Chaque capot de soufflante 208 s'étend angulairement sur environ 180° autour de l'axe longitudinal X avec une extrémité supérieure à 12 heures et une extrémité inférieure à 6 heures. Cette étendue angulaire ainsi que la position de l'extrémité supérieure sont variables selon qu'il y a ou non un capot supérieur 211.

Les systèmes d'articulation 300 de chaque capot de soufflante 208 sont disposés au voisinage de l'extrémité supérieure à 12 heures de manière à passer en position ouverte en soulevant le capot de soufflante 208 et le moyen de verrouillage est alors disposé à 6 heures.

La description des systèmes d'articulation 300 est maintenant faite sur un seul système d'articulation 300, mais chaque système d'articulation 300 d'un même capot de soufflante 208 sont préférentiellement identiques.

Le système d'articulation 300 comporte un arbre 302 dont un mode de réalisation est représenté à la Fig. 4.

L'arbre 302 comporte un cylindre central 302a et, au moins un cylindre latéral 302b-c.

Pour des raisons d'équilibrage, il y a ici deux cylindres latéraux 302b-c disposés de part et d'autre du cylindre central 302a.

La suite de la description s'appuie plus particulièrement sur le cas où il y a deux cylindres latéraux 302b-c, mais elle s'applique également au cas où il y a un seul cylindre latéral 302b-c.

Les cylindres latéraux 302b-c sont coaxiaux entre eux et le cylindre central 302a est désaxé par rapport aux cylindres latéraux 302b-c, c'est-à-dire que les axes 12b-c des cylindres latéraux 302b-c sont confondus et l'axe 12a du cylindre central 302a et les axes 12b-c des cylindres latéraux 302b-c sont parallèles mais distincts.

Les trois cylindres 302a-c sont solidaires les uns des autres, ici par l'intermédiaire de deux plateaux 304a-b. Ainsi, le cylindre central 302a et un premier cylindre latéral 302b sont solidaires et ici de part et d'autre d'un premier plateau 304a et le cylindre central 302a et un deuxième cylindre latéral 302c sont solidaires et ici de part et d'autre d'un deuxième plateau 304b.

L'axe 12a-c de chaque cylindre 302a-c est parallèle à l'axe longitudinal X.

Le cylindre central 302a est monté mobile en rotation sur le châssis 402 autour de son axe 12a. Dans le mode de réalisation de l'invention présenté à la Fig. 3, le cylindre central 302a est monté dans un alésage traversant du châssis 402.

Chaque cylindre latéral 302b-c est monté mobile en rotation sur le capot de soufflante 208 associé autour de son axe 12b-c, ici par l'intermédiaire d'une ferrure 208a solidaire du capot de soufflante 208 et présentant, pour chaque cylindre latéral 302b-c, un alésage traversant dans lequel est monté ledit cylindre latéral 302b-c.

En position fermée le cylindre central 302a est au-dessus des cylindres latéraux 302b-c mais une disposition différente avec un décalage vertical par exemple, voire des positions inversées sont également possibles.

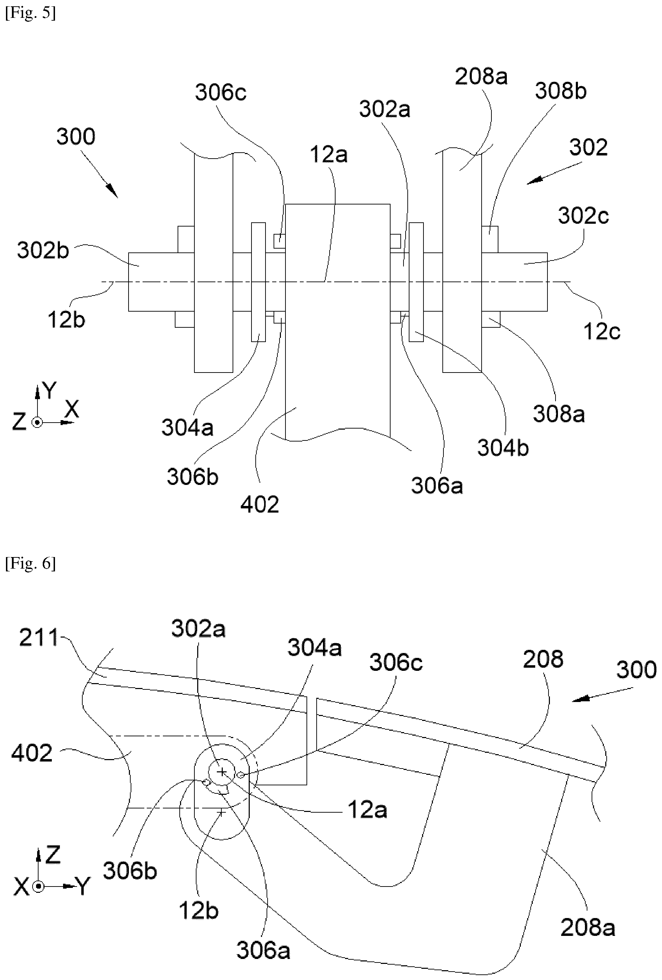

La Fig. 5 montre le système d'articulation 300 en vue de dessus avec les deux cylindres latéraux 302b-c de part et d'autre du cylindre central 302a.

Le système d'articulation 300 comporte des moyens de blocage 306 qui sont arrangés pour limiter la rotation du cylindre central 302a par rapport au châssis 402 entre une première position correspondant à la position fermée du capot de soufflante 208 et une deuxième position correspondant à une position intermédiaire du capot de soufflante 208 entre la position fermée et la position ouverte dudit capot de soufflante 208 dans laquelle le capot de soufflante 208 est décalé latéralement du côté correspondant audit capot de soufflante 208.

En d'autres termes, le capot de soufflante 208 qui est à tribord, respectivement bâbord, est décalé latéralement vers l'extérieur, c'est-à-dire vers tribord, respectivement bâbord, pour atteindre sa position intermédiaire en déplaçant en rotation le cylindre central 302a de sa première position à sa deuxième position.

Le système d'articulation 300 comporte des moyens d'arrêt 308 qui sont arrangés pour autoriser la rotation du capot de soufflante 208 par rapport à chaque cylindre latéral 302b-c entre une première position correspondant à la position intermédiaire du capot de soufflante 208 et une deuxième position correspondant à la position ouverte du capot de soufflante 208 et empêcher la rotation du capot de soufflante 208 au-delà de la position intermédiaire en venant de la position ouverte.

Le principe d'ouverture du capot de soufflante 208 consiste ainsi, à partir de la position fermée, à déplacer latéralement le capot de soufflante 208 vers tribord pour le capot de soufflante 208 tribord, et vers bâbord pour le capot de soufflante 208 bâbord pour atteindre la position intermédiaire. Le déplacement latéralement correspond à une rotation autour du cylindre central 302a. Ensuite, le capot de soufflante 208 est déplacé en rotation autour des cylindres latéraux 302b-c pour atteindre la position ouverte.

À l'inverse le principe de fermeture du capot de soufflante 208 consiste, à partir de la position ouverte, à déplacer le capot de soufflante 208 autour des cylindres latéraux 302b-c de la position ouverte à la position intermédiaire, puis à déplacer latéralement le capot de soufflante 208 vers bâbord pour le capot de soufflante 208 tribord, et vers tribord pour le capot de soufflante 208 bâbord pour atteindre la position fermée.

Grâce au désaxage entre le cylindre central 302a et les cylindres latéraux 302b-c, le capot de soufflante 208 se décale latéralement pour s'éloigner de l'autre capot de soufflante 208 ou du capot supérieur 211 et ainsi pouvoir s'ouvrir ou se fermer sans risque d'interactions.

Dans le mode de réalisation de l'invention présenté sur les Figs. 3 à 10, les moyens de blocage 306 sont constitués d'une première palette 306a solidaire de l'arbre 302 et de deux premiers plots 306b-c solidaires du châssis 402. Les deux premiers plots 306b-c sont disposés de part et d'autre de la première palette 306a et l'un des premiers plots 306b est arrangé de manière à ce que la première palette 306a soit en butée contre lui en position fermée du capot de soufflante 208 et l'autre des premiers plots 306c est arrangé de manière à ce que la première palette 306a soit en butée contre lui en position intermédiaire du capot de soufflante 208.

Dans le mode de réalisation de l'invention présenté sur les Figs. 3 à 10, les moyens d'arrêt 308 sont constitués, ici pour chaque cylindre latéral 302b-c, d'une deuxième palette 308a solidaire de l'arbre 302 et d'un deuxième plot 308b solidaire du capot de soufflante 208, ici de la ferrure 208a. Le deuxième plot 308b est arrangé de manière à ce que la deuxième palette 308a soit en butée contre lui en position intermédiaire du capot de soufflante 208. La position ouverte du capot de soufflante 208 est déterminée par la rotation maximale que peut faire le capot de soufflante autour des cylindres latéraux 302b-c.

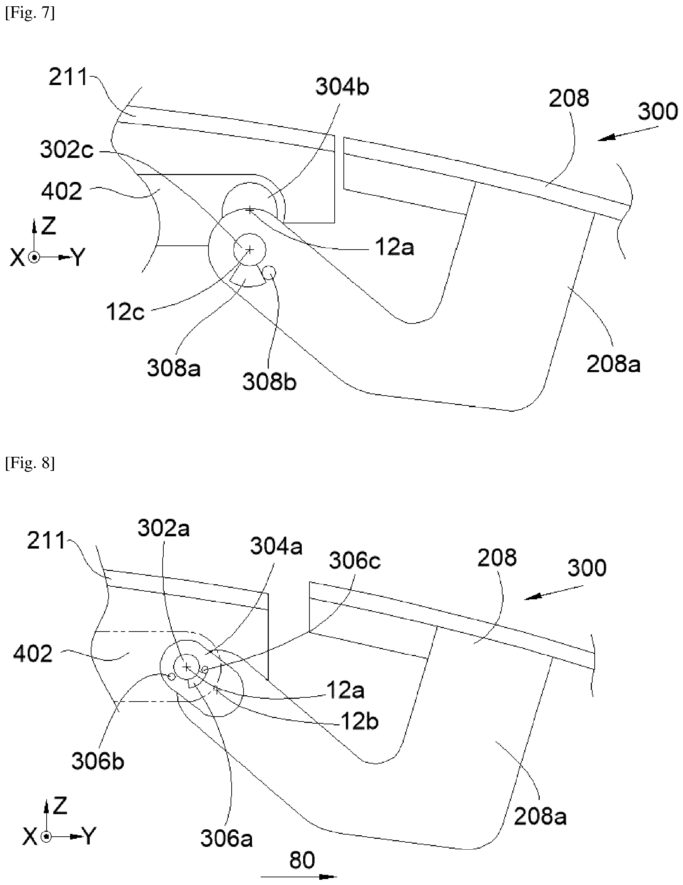

La Fig. 6 montre les moyens de blocage 306 en position fermée du capot de soufflante 208 et la Fig. 7 montre les moyens d'arrêt 308 en position fermée du capot de soufflante 208.

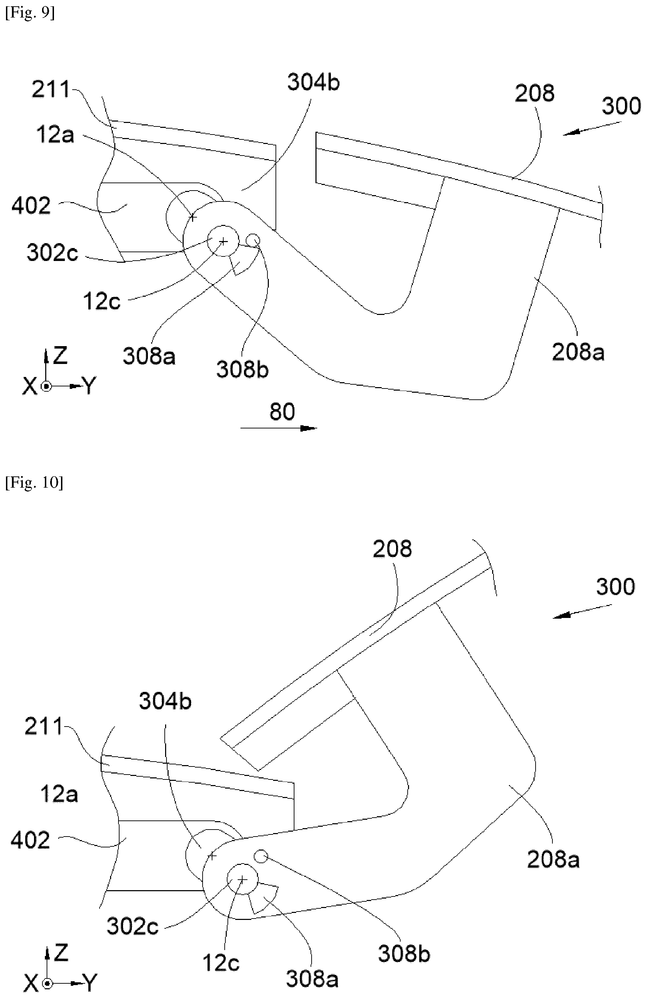

La Fig. 8 montre les moyens de blocage 306 en position intermédiaire du capot de soufflante 208 et la Fig. 9 montre les moyens d'arrêt 308 en position intermédiaire du capot de soufflante 208.

La Fig. 10 montre les moyens d'arrêt 308 en position ouverte du capot de soufflante 208.

En position fermée (Fig. 6), la première palette 306a est en butée contre le premier plot 306b celui qui est ici disposé du côté opposé au capot de soufflante 208, c'est-à-dire à tribord pour le capot de soufflante 208 bâbord et à bâbord pour le capot de soufflante 208 tribord.

En position fermée (Fig. 7), la deuxième palette 308a est en butée contre le deuxième plot 308b celui qui est ici disposé du même côté que le capot de soufflante 208, c'est-à-dire à tribord pour le capot de soufflante 208 tribord et à bâbord pour le capot de soufflante 208 bâbord.

Le passage en position intermédiaire consiste (Fig. 8) consiste à déplacer le capot de soufflante 208 latéralement (flèche 80) jusqu'à ce que la première palette 306a soit en butée contre l'autre premier plot 306c celui qui est disposé ici du même côté que le capot de soufflante 208, c'est-à-dire à tribord pour le capot de soufflante 208 tribord et à bâbord pour le capot de soufflante 208 bâbord.

Lors du passage en position intermédiaire (Fig. 9), les moyens d'arrêt 308 restent dans la même position sauf qu'ils ont pivoté autour du cylindre central 302a.

Le passage en position ouverte consiste (Fig. 10) à déplacer en rotation le capot de soufflante 208 autour des cylindres latéraux 302b-c entraînant le décollement du deuxième plot 308b de la deuxième palette 308a tandis que les moyens de blocage 306 restent dans la même position (Fig. 8).

À l'inverse depuis la position ouverte (Fig. 10) du capot de soufflante 208, ce dernier est déplacé en rotation autour des cylindres latéraux 302b-c jusqu'à amener le deuxième plot 308a en butée contre la deuxième palette 308a (Fig. 9) tandis que les moyens de blocage 306 restent dans la même position (Fig. 8) pour atteindre la position intermédiaire du capot de soufflante 208.

Le passage de la position intermédiaire à la position fermée (Fig. 6) consiste à déplacer latéralement (inverse de la flèche 80) le capot de soufflante 208 jusqu'à ramener la première palette 306a contre le premier plot 306b disposé du côté opposé au capot de soufflante 208, tandis que les moyens d'arrêt 308 restent dans la même position (Fig. 7) à la rotation autour du premier cylindre 302a près.

Les positions des plots par rapport aux palettes peuvent être différentes en fonction de la configuration, par exemple si la palette est disposée vers le haut et non vers le bas comme représenté ici.

## Revendications

1. Système de propulsion (106) pour un aéronef (100), ledit système de propulsion (106) comportant :
- un châssis (402),
- une nacelle (202) comportant deux capots de soufflante (208),
- pour chaque capot de soufflante (208), au moins un système d'articulation (300) fixé entre le châssis (402) et ledit capot de soufflante (208), de manière à déplacer ledit capot de soufflante (208) entre une position fermée et une position ouverte et inversement, et
- pour chaque capot de soufflante (208), un moyen de verrouillage arrangé pour prendre alternativement une position verrouillée dans laquelle il assure le verrouillage dudit capot de soufflante (208) sur le châssis (402) en position fermée et une position déverrouillée dans laquelle il n'assure pas le verrouillage dudit capot de soufflante (208) sur le châssis (402),
où chaque système d'articulation (300) comporte :
- un arbre (302) comportant un cylindre central (302a) avec un axe (12a) et au moins un cylindre latéral (302b-c) chacun avec un axe (12b-c), où le cylindre central (302a) est monté mobile en rotation sur le châssis (402) autour de son axe (12a), où ledit au moins un cylindre latéral (302b-c) est monté mobile en rotation sur le capot de soufflante (208) autour de son axe (12b-c), et où les axes (12b-c) desdits au moins un cylindre latéral (302b-c) sont coaxiaux et parallèles mais distincts de l'axe (12a) du cylindre central (302a),
- des moyens de blocage (306) arrangés pour limiter la rotation du cylindre central (302a) par rapport au châssis (402) entre une première position correspondant à la position fermée du capot de soufflante (208) et une deuxième position correspondant à une position intermédiaire du capot de soufflante (208) dans laquelle le capot de soufflante (208) est décalé latéralement du côté correspondant audit capot de soufflante (208), et
- des moyens d'arrêt (308) arrangés pour autoriser la rotation du capot de soufflante (208) par rapport audit au moins un cylindre latéral (302b-c) entre une première position correspondant à la position intermédiaire du capot de soufflante (208) et une deuxième position correspondant à la position ouverte du capot de soufflante (208) et empêcher la rotation du capot de soufflante (208) au-delà de la position intermédiaire en venant de la position ouverte, où les moyens de blocage (306) sont constitués d'une première palette (306a) solidaire de l'arbre (302) et de deux premiers plots (306b-c) solidaires du châssis (402), où les deux premiers plots (306b-c) sont disposés de part et d'autre de la première palette (306a), où l'un des premiers plots (306b) est arrangé de manière à ce que la première palette (306a) soit en butée contre lui en position fermée du capot de soufflante (208) et où l'autre des premiers plots (306c) est arrangé de manière à ce que la première palette (306a) soit en butée contre lui en position intermédiaire du capot de soufflante (208).

2. Système de propulsion (106) selon la revendication 1, **caractérisé en ce que** les moyens d'arrêt (308) sont constitués d'une deuxième palette (308a) solidaire de l'arbre (302) et d'un deuxième plot (308b) solidaire du capot de soufflante (208) et **en ce que** le deuxième plot (308b) est arrangé de manière à ce que la deuxième palette (308a) soit en butée contre lui en position intermédiaire du capot de soufflante (208).

3. Aéronef (100) comportant un moteur et un système de propulsion selon l'une des revendications précédentes où le moteur (204) est solidaire du châssis (402) et logé à l'intérieur de la nacelle (202).

## Patentansprüche

1. Antriebssystem (106) für ein Luftfahrzeug (100), wobei das Antriebssystem (106) aufweist:
- einen Rahmen (402),
- eine Gondel (202), die zwei Lüfterhauben (208) aufweist,
- für jede Lüfterhaube (208) mindestens ein Gelenksystem (300), das zwischen dem Rahmen (402) und dieser Lüfterhaube (208) befestigt ist, um die Lüfterhaube (208) zwischen einer geschlossenen Position und einer geöffneten Position und umgekehrt zu bewegen, und
- für jede Lüfterhaube (208) ein Verriegelungsmittel, das dazu eingerichtet ist, abwechselnd eine verriegelte Position, in der es die Verriegelung der Lüfterhaube (208) am Rahmen (402) sicherstellt, und eine entriegelte Position, in der es die Verriegelung der Lüfterhaube (208) am Rahmen (402) nicht sicherstellt, einzunehmen, wobei jedes Gelenksystem (300) aufweist:
- eine Welle (302), die einen zentralen Zylinder (302a) mit einer Achse (12a) und mindestens einen seitlichen Zylinder (302b-c) mit jeweils einer Achse (12b-c) aufweist, wobei der zentrale Zylinder (302a) am Rahmen (402) drehbeweglich um seine Achse (12a) gelagert ist, wobei der mindestens eine seitliche Zylinder (302b-c) an der Lüfterhaube (208) drehbeweglich um seine Achse (12b-c) gelagert ist und wobei die Achsen (12b-c) des mindestens einen seitlichen Zylinders (302b-c) koaxial und parallel sind, jedoch von der Achse (12a) des zentralen Zylinders (302a) verschieden sind,
- Sperrmittel (306), die dazu eingerichtet sind, die Drehung des zentralen Zylinders (302a) in Bezug auf den Rahmen (402) zwischen einer ersten Position, die der geschlossenen Position der Lüfterhaube (208) entspricht, und einer zweiten Position, die einer Zwischenposition der Lüfterhaube (208) entspricht, in der die Lüfterhaube (208) seitlich nach der dieser Lüfterhaube (208) entsprechenden Seite verlagert ist, zu begrenzen, und
- Anschlagmittel (308), die dazu eingerichtet sind, die Drehung der Lüfterhaube (208) in Bezug auf den mindestens einen seitlichen Zylinder (302b-c) zwischen einer ersten Position, die der Zwischenposition der Lüfterhaube (208) entspricht, und einer zweiten Position, die der geöffneten Position der Lüfterhaube (208) entspricht, zu ermöglichen und die Drehung der Lüfterhaube (208) von der geöffneten Position aus über die Zwischenposition hinaus zu verhindern, wobei die Sperrmittel (306) aus einem mit der Welle (302) fest verbundenen ersten Plättchen (306a) und aus zwei mit dem Rahmen (402) fest verbundenen ersten Klötzchen (306b-c) bestehen, wobei die zwei ersten Klötzchen (306b-c) beiderseits des ersten Plättchens (306a) angeordnet sind, wobei eines der ersten Klötzchen (306b) so angeordnet ist, dass das erste Plättchen (306a) in der geschlossenen Position der Lüfterhaube (208) an ihm anliegt, und wobei das andere der ersten Klötzchen (306c) so angeordnet ist, dass das erste Plättchen (306a) in der Zwischenposition der Lüfterhaube (208) an ihm anliegt.

2. Antriebssystem (106) nach Anspruch 1, **dadurch gekennzeichnet, dass** die Anschlagmittel (308) aus einem mit der Welle (302) fest verbundenen zweiten Plättchen (308a) und aus einem mit der Lüfterhaube (208) fest verbundenen zweiten Klötzchen (308b) bestehen, und dadurch, dass das zweite Klötzchen (308b) so angeordnet ist, dass das zweite Plättchen (308a) in der Zwischenposition der Lüfterhaube (208) an ihm anliegt.

3. Luftfahrzeug (100), welches ein Triebwerk und ein Antriebssystem nach einem der vorhergehenden Ansprüche aufweist, wobei das Triebwerk (204) mit dem Rahmen (402) fest verbunden ist und im Inneren der Gondel (202) untergebracht ist.

## Claims

1. Propulsion system (106) for an aircraft (100), said propulsion system (106) comprising:
- a chassis (402),
- a nacelle (202) comprising two fan cowls (208),
- for each fan cowl (208), at least one articulation system (300) fixed between the chassis (402) and said fan cowl (208), so as to move said fan cowl (208) between a closed position and an open position, and vice versa, and
- for each fan cowl (208), a locking means arranged to assume, alternately, a locked position in which it ensures the locking of said fan cowl (208) on the chassis (402) in the closed position and an unlocked position in which it does not ensure the locking of said fan cowl (208) on the chassis (402),
in which each articulation system (300) comprises:
- a shaft (302) comprising a central cylinder (302a) with an axis (12a) and at least one lateral cylinder (302b-c), each with an axis (12b-c), in which the central cylinder (302a) is movably mounted in rotation on the chassis (402) about its axis (12a), in which said at least one lateral cylinder (302b-c) is movably mounted in rotation on the fan cowl (208) about its axis (12b-c) and in which the axes (12b-c) of said at least one lateral cylinder (302b-c) are coaxial and parallel but distinct from the axis (12a) of the central cylinder (302a),
- blocking means (306) arranged to limit the rotation of the central cylinder (302a) relative to the chassis (402) between a first position corresponding to the closed position of the fan cowl (208) and a second position corresponding to an intermediate position of the fan cowl (208) in which the fan cowl (208) is laterally offset from the side corresponding to said fan cowl (208), and
- stopping means (308) arranged to allow rotation of the fan cowl (208) relative to said at least one lateral cylinder (302b-c) between a first position corresponding to the intermediate position of the fan cowl (208) and a second position corresponding to the open position of the fan cowl (208) and to prevent the rotation of the fan cowl (208) beyond the intermediate position when moving from the open position, wherein the blocking means (306) consist of a first blade (306a) integral with the shaft (302) and two first pins (306b-c) integral with the chassis (402), wherein the two first pins (306b-c) are arranged on either side of the first blade (306a), wherein one of the first pins (306b) is arranged in such a manner that the first blade (306a) abuts against it in the closed position of the fan cowl (208) and wherein the other of the first pins (306c) is arranged in such a manner that the first blade (306a) abuts against it in the intermediate position of the fan cowl (208).

2. Propulsion system (106) according to Claim 1, **characterized in that** the stopping means (308) consist of a second blade (308a) integral with the shaft (302) and a second pin (308b) integral with the fan cowl (208) and **in that** the second pin (308b) is arranged in such a manner that the second blade (308a) abuts against it in the intermediate position of the fan cowl (208).

3. Aircraft (100) comprising an engine and a propulsion system according to any one of the preceding claims in which the engine (204) is integral with the chassis (402) and housed inside the nacelle (202).
